# EUROPÄISCHE PATENTSCHRIFT

(11) **EP 2 627 888 B1**
(45) Veröffentlichungstag und Bekanntmachung des Hinweises auf die Patenterteilung: **15.04.2015**
(21) Anmeldenummer: 11761641.7
(22) Anmeldetag: 29.09.2011
(51) Int. Cl.: F02M 35/04

(54) **ADSORBERELEMENT, RINGFILTERELEMENT**
ADSORBER ELEMENT, RING FILTER ELEMENT
ÉLÉMENT ADSORBANT, ÉLÉMENT FILTRE ANNULAIRE

(30) Priorität: 13.10.2010 DE 102010042424
(43) Veröffentlichungstag der Anmeldung: 21.08.2013
(73) Patentinhaber: Mahle International GmbH, 70376 Stuttgart (DE)
(72) Erfinder: BERISHA, Bashkim, 71229 Leonberg (DE); BIBA, Stefan, 74354 Besigheim (DE); VON MERKATZ, Hendrik, 71686 Remseck (DE); RENZ, Birgit, 71672 Marbach (DE)
(74) Vertreter: BRP Renaud & Partner mbB Rechtsanwälte Patentanwälte Steuerberater
(86) Internationale Anmeldenummer: PCT/EP2011/066953
(87) Internationale Veröffentlichungsnummer: WO 2012/049027

(56) Entgegenhaltungen:
- EP-A2- 1 818 533
- WO-A1-2008/055065
- DE-A1-102009 010 922
- DE-U1-202006 007 096
- US-A1- 2004 211 320
- US-A1- 2007 113 740
- US-A1- 2007 278 034

## Beschreibung

Die vorliegende Erfindung betrifft ein ringförmiges Adsorberelement für eine Frischluftanlage einer Brennkraftmaschine, insbesondere eines Kraftfahrzeugs, zur Adsorption von Kohlenwasserstoffen (CHX), gemäß dem Oberbegriff des Anspruchs 1. Die Erfindung betrifft außerdem ein Ringfilterelement für ein Luftfilter einer Frischluftanlage einer Brennkraftmaschine, insbesondere eines Kraftfahrzeugs, das ein derartiges Adsorberelement aufweist. Ferner betrifft die Erfindung eine Luftführungsleitung für eine Frischluftanlage einer Brennkraftmaschine, insbesondere eines Kraftfahrzeugs, die mit einem solchen Adsorberelement ausgestattet ist. Schließlich betrifft die vorliegende Erfindung noch ein Verfahren zum Herstellen eines derartigen Adsorberelements.

Aus der DE 20 2006 007 096 U1 ist ein ringförmiges Adsorberelement bekannt, das aus wenigstens zwei gleichen Adsorberteilen zusammengesetzt ist und in einer Frischluftleitung einer Frischluftanlage einer Brennkraftmaschine stromab eines Luftfilters angeordnet ist. Zur Realisierung eines derartigen Adsorberelements wird ein selbsttragendes Adsorbermaterial bereitgestellt werden, was vergleichsweise aufwändig ist.

Ein gattungsgemäßes Adsorberelement ist aus der US 2004/211320 A1 bekannt. Es umfasst ein Adsorbermaterial, an dem eine Stützstruktur angeordnet ist, wobei sich das Adsorbermaterial zylindrisch erstreckt und einen Zylinder definiert, der eine zylindrische Innenkontur und eine zylindrische Außenkontur aufweist.

Aus der US 2007/0113740 A1 ist eine Filtereinrichtung mit einem Filtergehäuse bekannt, in dem ein Filterelement und stromauf davon ein Adsorber angeordnet sind.

Aus der DE 10 2009 010 922 A1 ist ein ringförmiges Adsorberelement bekannt, bei dem ein bahnförmiges Adsorbermaterial radial zwischen einem Innenkäfig und einem Außenkäfig angeordnet ist, wobei Innenkäfig und Außenkäfig eine Stützstruktur für die Adsorbermaterialbahn bilden.

Aus der EP 1 818 533 A2 ist ein vollzylindrisches Adsorberelement bekannt, das aus einem porösen Metallmonolithen bestehen kann, auf den ein Kohlenwasserstoff adsorbierendes Material aufgetragen ist.

Aus der WO 2008/055065 A1 ist ein Adsorberelement bekannt, das mit Hilfe einer ersten Bahnmateriaischicht hergestellt ist, in die mehrere Taschen zur Aufnahme eines Adsorbermaterials ausgeformt sind und die mithilfe einer zweiten Bahnmaterialschicht verschlossen sind.

Aus der US 2007/278034 A1 ist ein Einlassrohr bekannt, in das eine Adsorberfunktion integriert ist. Hierzu besitzt das Einlassrohr eine Innenhaut aus einem Fasermaterial, auf deren Außenseite ein Adsorbermaterial aufgebracht ist. Außen am Adsorbermaterial befindet sich eine Außenhaut, die mit der Innenhaut thermisch verbunden ist.

Die vorliegende Erfindung beschäftigt sich mit dem Problem, für ein Adsorberelement eine verbesserte Ausführungsform anzugeben, die sich insbesondere durch eine preiswerte Herstellbarkeit auszeichnet und die insbesondere eine vereinfachte Integration in andere Komponenten ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Adsorberelement mit Hilfe eines Adsorbermaterials zu bilden, an das eine Stützstruktur aus Kunststoff angespritzt ist. Hierdurch kann ein selbsttragendes Adsorberelement auch dann realisiert werden, wenn das dazu verwendete Adsorbermaterial selbst nicht tragfähig ist, da die Tragfunktion weitgehend von der angespritzten Stützstruktur übernommen werden kann. Die Stützstruktur kann hierbei aus einem einzelnen Steg oder durch mehrere Stege gebildet sein. Der jeweilige Steg kann sich in axialer oder radialer Richtung erstrecken. Außerdem ist eine spiralförmige Anordnung des jeweiligen Steges möglich. Alternativ oder zusätzlich kann die Stützstruktur als Ring ausgeführt sein. Weiterhin ist es möglich, mehrere Stege oder Ringe miteinander zu verbinden, um ein steiferes Gebilde zu erzeugen. Die Stützstruktur kann vorzugsweise einen kreisförmigen Querschnitt umschließen, wobei selbstverständlich auch andere Querschnitte, insbesondere ovale, polygone oder mehreckige Querschnitt realisiert werden können. Durch die erfindungsgemäße Bauweise eröffnen sich somit neuartige Möglichkeiten für die Verwendung preiswerter Adsorptionsmaterialien bei der Herstellung eines derartigen ringförmigen, selbsttragenden Adsorberelements. Somit lässt sich das Adsorberelement besonders preiswert herstellen. Bei einer weiteren Ausgestaltung der Erfindung wird das Adsorberelement, zumindest in einem Teilbereich, mit der Stützstruktur verklebt. Hierbei kann die Verklebung eine alternative oder zusätzliche Verbindung zu der angespritzten Stützstruktur bilden.

Erfindungsgemäß ist ferner vorgesehen, dass sich das Adsorbermaterial zylindrisch erstreckt und einen Zylinder definiert, der eine zylindrische Innenkontur und eine zylindrische Außenkontur aufweist, wobei die angespritzte Stützstruktur in den Zylinder integriert ist. Außerdem erstreckt sich die Stützstruktur erfindungsgemäß radial durch den Zylinder hindurch.

Entsprechend einer besonders vorteilhaften Ausführungsform kann das Adsorbermaterial ein einlagiges oder mehrlagiges Bahnenmaterial mit darin eingebettetem Adsorbermedium aufweisen oder durch das Bahnenmaterial und das darin eingebettete Adsorbermedium gebildet sein. Das Adsorbermaterial ist dadurch flexibel und lässt sich leicht in großen Mengen herstellen. Als Bahnenmaterial kommen unterschiedlichste Gewebe, Gewirke oder Vliese, vorzugsweise aus Kunststoff, in Betracht. Als Adsorbermedium eignet sich bspw. Kohlenstoff bzw. Aktivkohle. Das Adsorbermedium kann bevorzugt in Form eines rieselfähigen Granulats in das Bahnenmaterial eingebettet sein. Bspw. kann das Adsorbergranulat zwischen zwei Lagen des Bahnenmaterials angeordnet bzw. eingefüllt sein, deren Porengröße kleiner ist als die durchschnittliche Korngröße des Granulats.

Das Anspritzen des Kunststoffs zum Erzeugen der Stützstruktur kann entsprechend bevorzugter Ausführungsformen so durchgeführt werden, dass zumindest eines der folgenden Merkmale erfüllt ist. Insbesondere können gleichzeitig mehrere dieser Merkmale oder alle diese Merkmale erfüllt sein. Die Stützstruktur kann radial innen bündig mit der Innenkontur abschließen. Die Stützstruktur kann radial außen bündig mit der Außenkontur abschließen. Die Stützstruktur kann axial bündig mit einer axialen Stirnseite des Zylinders abschließen oder die jeweilige axiale Stirnseite des Zylinders bilden. Das Adsorbermaterial kann in den Kunststoff der Stützstruktur eingebettet sein.

Entsprechend einer besonders vorteilhaften Ausführungsform kann das Adsor bermaterial an axialen Stirnseiten des zylindrischen Adsorberelements durch die angespritzte Stützstruktur verschlossen sein. Insbesondere bei der Verwendung eines rieselfähigen Adsorbergranulats ergibt sich eine extreme Vereinfachung in der Handhabung bzw. bei der Herstellung des Adsorberelementes, wenn offene axiale Stirnseiten des Adsorbermaterials, aus denen das Adsorbergranulat austreten kann, im Rahmen der Herstellung des Adsorberelements durch die angespritzte Stützstruktur verschlossen werden. Bspw. kann im Rahmen der Herstellung das Adsorbermaterial bahnenförmig bereitgestellt und auf die für die Herstellung der Adsorberelemente jeweils benötigte Größe zugeschnitten werden. Durch diesen Zuschnitt entstehen offene Seitenkanten, durch welche das Adsorbermedium austreten kann. Beim fertigen Adsorberelement sind diese offenen seitlichen Kanten oder Ränder dann durch den Kunststoff der angespritzten Stützstruktur verschlossen. Dies gilt insbesondere auch für einen Umfangsstoß, der durch die angespritzte Stützstruktur verschlossen sein kann oder alternativ durch Verschweißen oder Verkleben der in der Umfangsrichtung aneinander stoßenden Enden des Adsorbermaterials verschlossen sein kann.

Bei einer anderen Ausführungsform kann das Adsorbermaterial in der Umfangs- und/oder Axialrichtung segmentiert sein und mehrere separate Adsorbermaterialabschnitte aufweisen, die an ihren Umfangsenden oder Seitenkanten durch die angespritzte Stützstruktur verschlossen sind. Wie bereits erwähnt, entstehen beim Zuschneiden des bahnenförmig bereitgestellten Adsorbermaterials offene Ränder bzw. Kanten, durch welche Adsorbermedium austreten kann. Derartige Ränder oder Kanten grenzen beim jeweiligen Adsorberelement in der Umfangs- und/oder Axialrichtung aneinander an. Durch gezieltes Anspritzen der Stützstruktur, derart, dass in den genannten Stoßbereichen die Umfangsenden durch den angespritzten Kunststoff verschlossen werden, kann ein Austritt des Adsorbermediums aus dem Adsorbermaterial reduziert bzw. ganz verhindert werden.

Besonders zweckmäßig ist dabei eine Ausführungsform, bei welcher zumindest zwei oder alle Adsorbermaterialabschnitte an ihren Umfangsenden durch die angespritzte Stützstruktur aneinander befestigt sind. Hierdurch werden durch die angespritzte Stützstruktur nicht nur die einzelnen Adsorbermaterialabschnitte selbsttragend bzw. stabilisiert, sondern das gesamte Adsorberelement bzw. einzelne Adsorberelementteile, die jeweils mindestens zwei Adsorbermaterialabschnitte umfassen.

Bei einer anderen Ausführungsform kann vorgesehen sein, dass die Stützstruktur zwei Ringe und mehrere Axialstege aufweist, welche die Ringe miteinander verbinden. Insbesondere können dabei die Ringe die axialen Stirnseiten des ringförmig angeordneten Adsorbermaterials verschließen, während die Axialstege die besagten Umfangsenden der Adsorbermaterialabschnitte verschließen bzw. miteinander verbinden. Ebenso kann zumindest ein derartiger Axialsteg so positioniert sein, dass er durch einen durchgehenden Bereich des Adsorbermaterials hindurchgeführt ist und dort eine Stabilisierung bzw. Aussteifung des Adsorbermaterials bewirkt. Insgesamt kann die Stützstruktur durch die mit den Axialstegen miteinander verbundenen Ringen eine vergleichsweise hohe Stabilität für das Adsorberelement realisieren.

Entsprechend einer anderen vorteilhaften Ausführungsform kann das Adsorberelement einen Bestandteil eines Ringfilterelements eines Luftfilters der Frischluftanlage bilden. Bevorzugt kann das Adsorberelement dabei einen Bestandteil einer Innenzarge dieses Ringfilterelements bilden.

Gemäß einer bevorzugten Ausführungsform kann das Adsorberelement zum Anbauen an die Innenzarge des Ringfilterelements ausgestaltet sein. Alternativ kann die Stützstruktur des Adsorberelements integral an der Innenzarge des Ringfilterelements ausgeformt sein. Insbesondere können die Innenzarge und die Stützstruktur in einer gemeinsamen Spritzform gleichzeitig bzw. in einem Stück spritzgeformt werden.

Alternativ kann das Adsorberelement auch als Bestandteil einer Luftführungsleitung der Frischluftanlage konzipiert sein. Bspw. kann das Adsorberelement zum Einbauen in die Luftführungsleitung der Frischluftanlage ausgestaltet sein. Alternativ kann die Stützstruktur des Adsorberelementes integral in der Luftführungsleitung der Frischluftanlage ausgeformt sein. Vorzugsweise sind dabei die Stützstruktur und die Luftführungsleitung in der gleichen Spritzform in einem Stück spritzgeformt.

Ein erfindungsgemäßes Ringfilterelement, das für ein Luftfilter einer Frischluftanlage einer Brennkraftmaschine, insbesondere eines Kraftfahrzeugs, geeignet ist, weist ein Filtermaterial und eine Innenzarge auf, die das Filtermaterial radial innen abstützt. Die Innenzarge ist nun mit einem solchen Adsorberelement ausgestattet, wobei das ringförmige Adsorberelement zweckmäßig koaxial zur ringförmigen Innenzarge angeordnet ist.

Besonders vorteilhaft ist dabei eine Ausführungsform, bei welcher das Adsorberelement bzgl. der Innenzarge ein separates Bauteil ist und an die Innenzarge angebaut ist. Alternativ können auch die Stützstruktur und die Innenzarge integral aus einem Stück hergestellt sein.

Bei einer anderen Ausführungsform kann das Adsorberelement einen das Filtermaterial radial innen abstützenden Axialabschnitt der Innenzarge bilden. Somit übernimmt das Adsorberelement in einem Axialabschnitt des Ringfilterelements die Funktion der Innenzarge. Umgekehrt übernimmt bei einer solchen Ausführungsform ein Axialabschnitt der Innenzarge die Funktion des Adsorberelements. Beim jeweiligen Axialabschnitt der Innenzarge kann es sich bevorzugt um einen axialen Endabschnitt handeln.

Entsprechend einer vorteilhaften Ausführungsform kann die Innenzarge axial zwischen dem Adsorberelement und einem daran angrenzenden Axialabschnitt der Innenzarge ein Strömungshindernis aufweisen, das die axiale Durchströmung der Innenzarge behindert. Hierdurch kann die Verweildauer der Luft im Bereich des Adsorberelements vergrößert werden, um die Adsorptionswirkung zu verbessern.

Des Weiteren kann vorgesehen sein, dass sich das Strömungshindernis über den gesamten Innenquerschnitt der Innenzarge erstreckt und bspw. durch eine Siebstruktur oder Gitterstruktur gebildet ist. Insbesondere kann ein derartiges Strömungshindernis in den Kunststoff der Innenzarge eingebettet sein oder daran integral ausgeformt sein. Bspw. kann die Innenzarge gemeinsam mit dem Strömungshindernis und insbesondere gemeinsam mit der Stützstruktur aus einem Stück spritzgeformt sein.

Bei einer erfindungsgemäßen Luftführungsleitung, die für eine Frischluftanlage einer Brennkraftmaschine, insbesondere eines Kraftfahrzeugs, geeignet ist, kann an einer Innenwand zumindest ein derartiges Adsorberelement koaxial angeordnet sein. Bspw. kann es sich beim Adsorberelement dann um ein bzgl. der Luftführungsleitung separates Bauteil handeln, das in die Luftführungsleitung eingebaut ist. Alternativ kann jedoch auch vorgesehen sein, die Stützstruktur des Adsorberelements und die Luftführungsleitung integral aus einem Stück herzustellen.

Besonders zweckmäßig ist eine Ausführungsform, bei welcher das Adsorberelement in der Innenwand der Luftführungsleitung radial versenkt angeordnet ist. Bei einer Ausführungsform, bei welcher das Adsorberelement bzgl. der Luftführungsleitung ein separates Bauteil ist, kann es zweckmäßig sein, das Adsorberelement zumindest zweiteilig auszugestalten und erst beim Montieren in der Luftführungsleitung zusammen zu bauen. Hierdurch ist es insbesondere möglich, das Adsorberelement in eine in der Innenwand der Luftführungsleitung ausgebildete Versenkung einzusetzen, wenn sein Außenquerschnitt größer ist als ein Innenquerschnitt der Luftführungsleitung.

Ein erfindungsgemäßes Verfahren zum Herstellen eines derartigen Adsorberelementes charakterisiert sich dadurch, dass zunächst das Adsorbermaterial in eine Spritzform eingelegt wird und dass anschließend die Stützstruktur an das Adsorbermaterial angespritzt wird. Dabei ist es grundsätzlich möglich, das Adsorbermaterial vor dem Einlegen in die Spritzform zu segmentieren, sodass dann die separaten Adsorbermaterialabschnitte in die Spritzform eingelegt werden. Dabei können die Adsorbermaterialabschnitte so in die Spritzform eingelegt werden, dass ihre Umfangsenden in Bereichen der anzuspritzenden Axialstege angeordnet und in der Umfangsrichtung voneinander beabstandet sind oder aneinander angrenzen. Ferner lässt sich entsprechend einer bevorzugten Ausführungsform die Spritzform so gestalten, dass die Stützstruktur und eine Innenzarge eines Ringfilterelements gleichzeitig in derselben Spritzform spritzgeformt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen vereinfachten Längsschnitt durch ein Luftfilter einer Frischluftanlage,
- Fig. 2: eine perspektivische Seitenansicht eines ringförmigen Adsorberelements,
- Fig. 3: eine perspektivische Seitenansicht einer Innenzarge eines Ringfilterelements,
- Fig. 4: eine perspektivische Ansicht eines Adsorberelementteils,
- Fig. 5: einen vereinfachten Längsschnitt einer Luftführungsleitung mit einem Adsorberelement einer Frischluftanlage,
- Fig. 6: einen Längsschnitt wie in Fig. 5, jedoch bei entferntem Adsorberelement,
- Fig. 7: einen Querschnitt der Luftführungsleitung im Bereich des Adsorberelements entsprechend Schnittlinien VII in Fig. 5,
- Fig. 8: zeigt einen stark vereinfachten Querschnitt durch ein Adsorbermaterial.

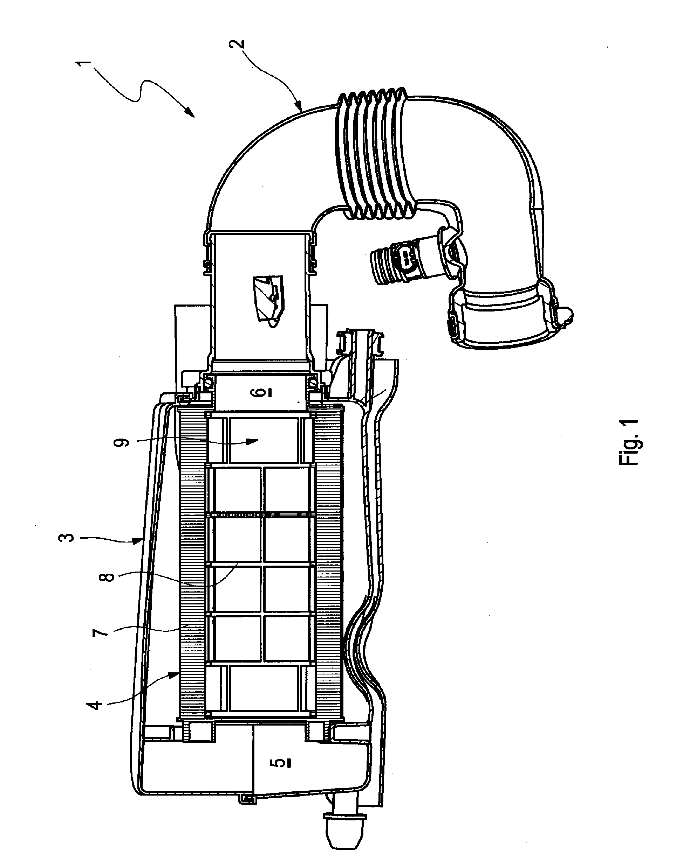

Entsprechend Fig. 1 umfasst ein Luftfilter 1 einer nur teilweise dargestellten Frischluftanlage 2 zur Versorgung einer Brennkraftmaschine mit Frischluft, die sich bevorzugt in einem Kraftfahrzeug befinden kann, in einem Gehäuse 3 ein Ringfilterelement 4, das im Gehäuse 3 eine Rohseite 5 von einer Reinseite 6 trennt. Das Ringfilterelement 4 besitzt ein ringförmig angeordnetes Filtermaterial 7 und eine ringförmige Innenzarge 8, die radial innen am Filtermaterial 7 angeordnet ist, sodass sich das Filtermaterial 7 radial innen an der Innenzarge 8 abstützen kann. Die hier gezeigte Innenzarge 8 weist ein Adsorberelement 9 auf, mit dessen Hilfe z.B. Kohlenwasserstoffe oder allgemein CHX adsorbiert werden können.

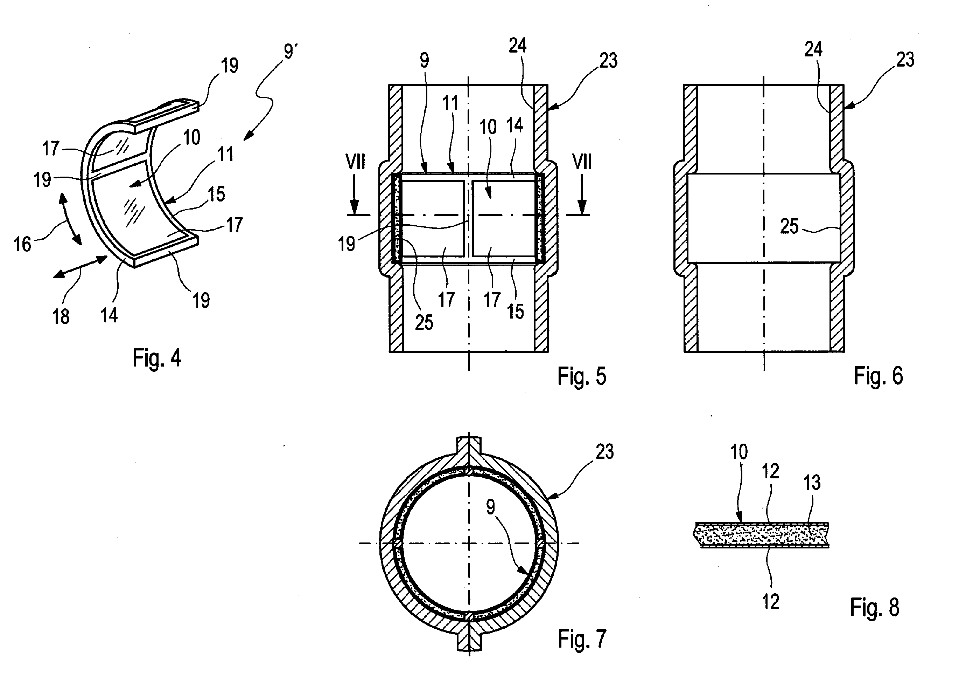

Entsprechend den Figuren 1 bis 7 ist das Adsorberelement 9 ringförmig gestaltet. Es besitzt ein ringförmig angeordnetes Adsorbermaterial 10 und eine an das Adsorbermaterial 10 angespritzte Stützstruktur 11 aus Kunststoff. Das Adsorbermaterial 10 kann ein Bahnenmaterial 12 gemäß Fig. 8 sein, in das ein Adsorbermedium 13 eingebettet ist. Hierzu kann das Bahnenmaterial 12 einlagig oder mehrlagig ausgestaltet sein. Es kann aus einem Gewirk, Gestrick, Gewebe oder aus einem Vlies hergestellt sein. Bevorzugt wird ein Bahnenmaterial aus Kunststoff. Das Adsorbermedium 13 ist bevorzugt Kohle bzw. Kohlenstoff, insbesondere Aktivkohle. Dabei kann das Adsorbermedium 13 als rieselfähiges Granulat vorhanden sein, das auf geeignete Weise in das Bahnenmaterial 12 eingebettet ist. Bspw. kann das granulatförmige Adsorbermedium 13 von den Lagen des Bahnenmaterials 12 umschlossen sein.

Das Adsorbermaterial 10 ist gemäß den Figuren 1 bis 4 an axialen Stirnseiten durch die angespritzte Stützstruktur 11 verschlossen. Da sich die axialen Stirnseiten des Adsorbermaterials 10 ringförmig erstrecken, umfasst die Stützstruktur 11 dementsprechend zwei Ringe 14 und 15.

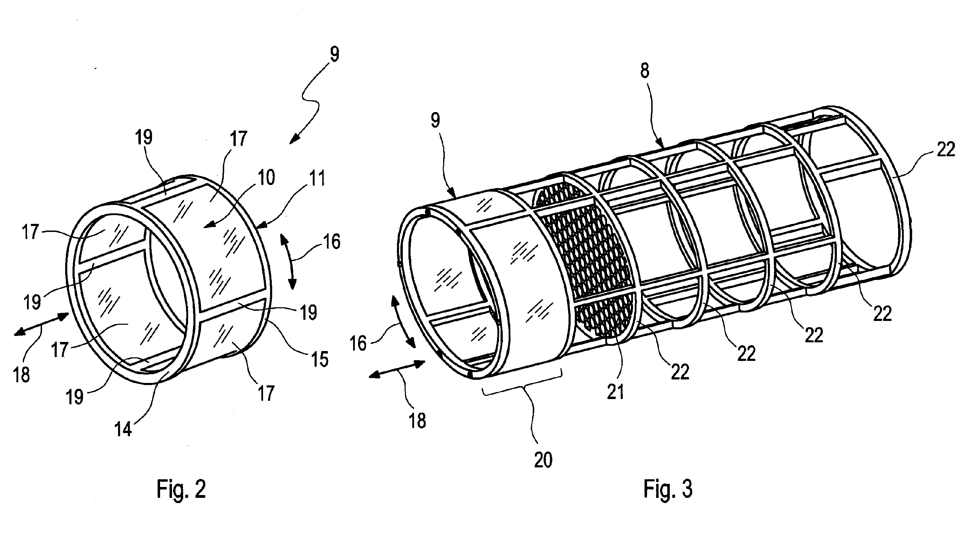

Das Adsorbermaterial 10 kann z.B. gemäß den Fig. 2 bis 4 in der durch einen Doppelpfeil angedeuteten Umfangsrichtung 16 segmentiert sein und dementsprechend mehrere separate Adsorbermaterialabschnitte 17 aufweisen. Im Beispiel der Fig. 2 sind vier separate Segmente 17 bzw. Adsorbermaterialabschnitte 17 vorgesehen. Diese Adsorbermaterialabschnitte 17 grenzen in der Umfangsrichtung 16 mit Umfangsenden aneinander an, die durch die angespritzte Stützstruktur 11 verschlossen sind. Zweckmäßig können sich besagte Umfangsenden dabei parallel zur Axialrichtung erstrecken, die durch einen Doppelpfeil angedeutet und mit 18 bezeichnet ist. Dementsprechend besitzt die Stützstruktur 11 im Bereich dieser Umfangsenden Axialstege 19. Da sich die Axialstege 19 in der Axialrichtung 18 über die gesamte Höhe des Adsorberelements 9 erstrecken, verbinden die Axialstege 19 die beiden Ringe 14, 15 miteinander. Im Beispiel sind genau vier Axialstege 19 vorgesehen. Es ist klar, dass dieses Zahlenbeispiel ohne Beschränkung der Allgemeinheit zu verstehen ist. Besonders zweckmäßig kann vorgesehen sein, dass zumindest zwei der Adsorbermaterialabschnitte 17 an ihren Umfangsenden durch die angespritzte Stützstruktur 11, insbesondere durch den jeweiligen Axialsteg 19 aneinander befestigt sind. Ebenso ist es grundsätzlich möglich, das Adsorbermaterial 10 aus einem sich in Umfangsrichtung 16 erstreckenden Streifen zu bilden, der in Umfangsrichtung 16 nur einen Stoß aufweist, der mit Hilfe eines derartigen Axialstegs 19 verschlossen und verbunden werden kann. Ferner ist auch eine Bauform denkbar, bei der das Bahnenmaterial 10 ringförmig hergestellt ist und sich dementsprechend in der Umfangsrichtung 16 unterbrechungsfrei erstreckt. Auch bei diesen Ausführungsformen können mehrere Axialstege 19 vorgesehen sein, welche die beiden Ringe 14, 15 miteinander verbinden und die dementsprechend radial außen oder radial innen an das Adsorbermaterial 10 angespritzt sind. Ebenso ist es möglich, den Kunststoff der Stützstruktur 11 so an das Adsorbermaterial 10 anzuspritzen, dass der Kunststoff im Bereich der Axialstege 19 das Adsorbermaterial 10 durchdringt, sodass im Bereich des jeweiligen Axialstegs 19 das Adsorbermaterial 10 in den Axialsteg 19 eingebettet ist.

Gemäß Fig. 2 kann das Adsorberelement 9 bzgl. der Innenzarge 8 des Filterelements 4 ein separates Bauteil bilden. Dieses separate Adsorberelement 9 ist entsprechend der in Fig. 1 gezeigten bevorzugten Ausführungsform dann so ausgestaltet, dass es an die Innenzarge 8 angebaut werden kann.

Ebenso ist es gemäß Fig. 3 möglich, die Stützstruktur 11 des Adsorberelements 9 integral an der Innenzarge 8 auszuformen, wodurch dann das Adsorberelement 9 einen integralen Bestandteil der Innenzarge 8 bildet.

Entsprechend den Figuren 1 und 3 ist das Adsorberelement 9 so an der Innenzarge 8 angeordnet bzw. daran ausgebildet, dass das Adsorberelement 9 einen Axialabschnitt 20 der Innenzarge 8 bildet, der einen entsprechenden Axialabschnitt des Filtermaterials 7 radial innen abstützt. Insbesondere kann dabei der durch das Adsorberelement 9 gebildete Axialabschnitt 20 der Innenzarge 8 einen axialen Endabschnitt der Innenzarge 8 bilden.

Bei den hier gezeigten Ausführungsformen der Figuren 1 und 3 ist die Innenzarge 8 mit einem Strömungshindernis 21 ausgestattet, das axial zwischen den axialen Enden der Innenzarge 8 angeordnet ist und das außerhalb bzw. beabstandet vom Adsorberelement 9 angeordnet ist. Das Strömungshindernis 21 ist dabei so ausgestaltet bzw. angeordnet, dass es eine axiale Durchströmung der Innenzarge 8 behindert. Insbesondere kann sich das Strömungshindernis 21 wie hier über dein gesamten Innenquerschnitt der Innenzarge 8 erstrecken. Im Beispiel ist das Strömungshindernis 21 durch eine Siebstruktur oder Gitterstruktur gebildet. Das Strömungshindernis 21 erstreckt sich in einer Ebene, die quer zur Axialrichtung 18 verläuft. Im Beispiel ist das Strömungshindernis 21 im Bereich eines Rings 22 der Innenzarge 8 ausgebildet.

Die Figuren 4 bis 7 zeigen eine andere Ausführungsform, bei welcher das Adsorberelement 9 in eine Luftführungsleitung 23 der Abgasanlage 2 eingebaut ist. Zweckmäßig befindet sich diese Luftführungsleitung 23 dabei stromab des Filters 1 bzw. außerhalb des Gehäuses 3 in Frischluftanlage 2. Bei einer anderen, hier nicht gezeigten, Ausführungsform kann die Stützstruktur 11 integral an der Luftführungsleitung 23 ausgeformt sein.

Das Adsorberelement 9 ist so in die Luftführungsleitung 23 eingebaut, dass es an einer Innenwand 24 der Luftführungsleitung 23 angeordnet ist. Zweckmäßig erstreckt sich dabei das Adsorberelement 9 koaxial zur zylindrischen Luftführungsleitung 23. Zur verbesserten Unterbringung des Adsorberelements 9 in der Luftführungsleitung 23, kann die Innenwand 24 eine radial nach außen orientierte, ringförmig umlaufende Versenkung oder Vertiefung 25 aufweisen, in welche das Adsorberelement 9 eingesetzt ist. Einerseits kann dadurch das Adsorberelement 9 axial an der Luftführungsleitung 23 fixiert werden. Zum anderen kann dadurch der Strömungswiderstand im Bereich des Adsorberelements 9 reduziert werden. Zweckmäßig ist die Vertiefung oder Versenkung 25 so auf die radiale Dicke des Adsorberelements 9 abgestimmt, dass das Adsorberelement 9 in der Innenwand 24 radial versenkt und insbesondere bündig zur Innenwand 24 angeordnet ist. Hierbei wird eine Ausführungsform bevorzugt, bei welcher ein offener Innenquerschnitt des Adsorberelements 9 etwa gleich groß ist wie ein offener Innenquerschnitt des Luftführungsrohrs 23 axial neben der Vertiefung 25.

Gemäß Fig. 4 kann das Adsorberelement 9 für eine verbesserte Unterbringung in der Luftführungsleitung 23 zumindest zweiteilig ausgestaltet sein und dementsprechend zumindest zwei Adsorberelementteile 9' aufweisen, von denen in Fig. 4 eines dargestellt ist. Bspw. wird eine zweiteilige Ausführungsform bevorzugt, sodass das Adsorberelementteil 9' ein halbes Adsorberelement 9 repräsentiert bzw. ein Halbschale 9' des Adsorberelements 9 repräsentiert. Die einzelnen Adsorberelemente 9' können beim Montieren einzeln in die Luftführungsleitung 23 eingesetzt werden, um dort zum Adsorberelement 9 komplettiert zu werden.

Die Herstellung des Adsorberelements 9 bzw. der Adsorberelementteile 9' erfolgt zweckmäßig so, dass zunächst das Adsorbermaterial 10 oder die Adsorbermaterialabschnitte 17 in eine hier nicht gezeigte Spritzform eingelegt wird bzw. werden. Anschließend wird die Stützstruktur 11 an das Adsorbermaterial 10 angespritzt. Hierbei können sich die Ringe 14,15 und die Axialstege 19 ausbilden. Insbesondere kann die Spritzform auch so konzipiert sein, dass darin auch die Innenzarge 8 spritzgeformt werden kann. Dabei ist es insbesondere möglich, die Innenzarge 8 und die Stützstruktur 11 in einem Schuss, also durch einen einzigen Spritzformvorgang aus dem gleichen Kunststoff, spritz zu formen. Alternativ ist auch eine Zweischusstechnik denkbar, bei der zunächst die Innenzarge 8 und anschließend die Stützstruktur 11 spritzgeformt werden oder umgekehrt. Bei der Zweischusstechnik können für die Innenzarge 8 und für die Stützstruktur 11 gleiche oder unterschiedliche Kunststoffe verwendet werden.

## Patentansprüche

1. Ringförmiges Adsorberelement für eine Frischluftanlage (2) einer Brennkraftmaschine, insbesondere eines Kraftfahrzeugs, zur Adsorption von Kohlenwasserstoffen,
- wobei an einem Adsorbermaterial (10) eine Stützstruktur (11) angeordnet ist,
- wobei sich das Adsorbermaterial (10) zylindrisch erstreckt und einen Zylinder definiert, der eine zylindrische Innenkontur und eine zylindrische Außenkontur aufweist,
**dadurch gekennzeichnet,**
- **dass** die Stützstruktur (11) aus Kunststoff besteht und an das Adsorbermaterial (10) angespritzt ist,
- **dass** die angespritzte Stützstruktur (11) in den Zylinder integriert ist,
- **dass** sich die Stützstruktur (11) radial durch den Zylinder hindurch erstreckt.

2. Adsorberelement nach Anspruch 1,
**dadurch gekennzeichnet,**
**dass** das Adsorbermaterial (10) ein einlagiges oder mehrlagiges Bahnenmaterial (12) mit darin eingebettetem Adsorbermedium (13) aufweist, wobei insbesondere vorgesehen sein kann, dass das Adsorbermedium (13) als rieselförmiges Granulat in das Bahnenmaterial (12) eingebettet ist.

3. Adsorberelement nach Anspruch 1 oder 2,
**dadurch gekennzeichnet,**
**dass** die Stützstruktur (11) radial innen bündig mit der Innenkontur und/oder radial außen bündig mit der Außenkontur abschließt.

4. Adsorberelement nach einem der Ansprüche 1 bis 3,
**dadurch gekennzeichnet,**
**dass** die Stützstruktur (11) axial bündig mit einer axialen Stirnseite des Zylinders abschließt oder die jeweilige axiale Stirnseite des Zylinders bildet.

5. Adsorberelement nach einem der Ansprüche 1 bis 5,
**dadurch gekennzeichnet,**
- **dass** das Adsorbermaterial (10) in den Kunststoff der Stützstruktur (11) eingebettet ist, und/oder
- **dass** das Adsorbermaterial (10) an axialen Stirnseiten durch die angespritzte Stützstruktur (11) verschlossen ist.

6. Adsorberelement nach einem der Ansprüche 1 bis 5,
**dadurch gekennzeichnet,**
**dass** das Adsorbermaterial (10) in der Umfangsrichtung (16) segmentiert ist und mehrere separate Adsorbermaterialabschnitte (17) aufweist, die an ihren Umfangsenden durch die angespritzte Stützstruktur (11) verschlossen sind, wobei insbesondere vorgesehen sein kann, dass alle Adsorbermaterialabschnitte (17) oder zumindest zwei solche Adsorbermaterialabschnitte (17) an ihren Umfangsenden durch die angespritzte Stützstruktur (11) aneinander befestigt sind.

7. Adsorberelement nach einem der Ansprüche 1 bis 6,
**dadurch gekennzeichnet,**
**dass** die Stützstruktur (11) zwei Ringe (14,15) und mehrere Axialstege (19) aufweist, welche die Ringe (14,15) miteinander verbinden.

8. Adsorberelement nach einem der Ansprüche 1 bis 7,
**dadurch gekennzeichnet,**
- **dass** das Adsorberelement (9) zum Anbauen an eine Innenzarge (8) eines Ringfilterelements (4) eines Luftfilters (1) der Frischluftanlage (2) ausgestaltet ist, oder
- **dass** die Stützstruktur (11) des Adsorberelements (9) integral an einer Innenzarge (8) eines Ringfilterelements (4) eines Luftfilters (1) der Frischluftanlage (2) ausgeformt ist, oder
- **dass** das Adsorberelement (9) zum Einbauen in eine Luftführungsleitung (23) der Frischluftanlage (2) ausgestaltet ist, oder
- **dass** die Stützstruktur (11) des Adsorberelements (9) integral in einer Luftführungsleitung (23) der Frischluftanlage (2) ausgeformt ist.

9. Ringfilterelement für ein Luftfilter (1) einer Frischluftanlage (2) einer Brennkraftmaschine, insbesondere eines Kraftfahrzeugs,
- mit einem Filtermaterial (10), das radial innen von einer Innenzarge (8) abgestützt ist,
- wobei die Innenzarge (8) ein Adsorberelement (9) nach einem der Ansprüche 1 bis 8 aufweist.

10. Ringfilterelement nach Anspruch 9,
**dadurch gekennzeichnet,**
- **dass** das Adsorberelement (9) bzgl. der Innenzarge (8) ein separates Bauteil ist und an die Innenzarge (8) angebaut ist, oder
- **dass** die Stützstruktur (11) und die Innenzarge (8) integral aus einem Stück hergestellt sind.

11. Ringfilterelement nach Anspruch 9 oder 10,
**dadurch gekennzeichnet,**
- **dass** das Adsorberelement (9) einen das Filtermaterial (10) radial innen abstützenden Axialabschnitt (20), insbesondere einen axialen Endabschnitt (20), der Innenzarge (8) bildet, und/oder
- **dass** die Innenzarge (8) axial zwischen dem Adsorberelement (9) und einem axialen Ende ein Strömungshindernis (21) aufweist, das die axiale Durchströmung der Innenzarge (8) behindert, wobei sich das Strömungshindernis (21) über den ganzen Innenquerschnitt der Innenzarge (8) erstrecken kann und z. B. durch eine Siebstruktur oder Gitterstruktur gebildet sein kann.

12. Luftführungsleitung für eine Frischluftanlage (2) einer Brennkraftmaschine, insbesondere eines Kraftfahrzeugs, die an ihrer Innenwand (24) zumindest ein, insbesondere koaxial angeordnetes, Adsorberelement (9) nach einem der Ansprüche 1 bis 8 aufweist.

13. Luftführungsleitung nach Anspruch 12,
**dadurch gekennzeichnet,**
- **dass** das Adsorberelement (9) ein bzgl. der Luftführungsleitung (23) separates Bauteil ist, das in die Luftführungsleitung (23) eingebaut ist, oder dass die Stützstruktur (11) des Adsorberelements (9) und die Luftführungsleitung (23) integral aus einem Stück hergestellt sind, und/oder
- **dass** das Adsorberelement (9) in der Innenwand (24) der Luftführungsleitung (23) radial versenkt angeordnet ist, und/oder
- **dass** das Adsorberelement (9) zumindest zweiteilig ausgestaltet ist und beim Montieren in der Luftführungsleitung (23) zusammengebaut ist.

14. Verfahren zum Herstellen eines Adsorberelements (9) nach einem der Ansprüche 1 bis 8,
- bei dem das Adsorbermaterial (10) in eine Spritzform eingelegt wird,
- bei dem die Stützstruktur (11) an das Adsorbermaterial (10) angespritzt wird.

15. Verfahren nach Anspruch 14,
**dadurch gekennzeichnet,**
- **dass** das Adsorbermaterial (10) vor dem Einlegen in die Spritzform segmentiert wird, wobei die separaten Adsorbermaterialabschnitte (17) mit voneinander in Umfangsrichtung (16) beabstandeten oder aneinander anliegenden Umfangsenden in die Spritzform eingelegt werden, und/oder
- **dass** die Stützstruktur (11) und die Innenzarge (8) gleichzeitig in derselben Spritzform spritzgeformt werden.

## Claims

1. An annular adsorber element for a fresh air system (2) of an internal combustion engine, in particular of a motor vehicle, for adsorbing hydrocarbons,
- wherein a support structure (11) is arranged at an adsorber material (10),
- wherein the adsorber material (10) extends cylindrically and defines a cylinder having a cylindrical inner contour and a cylindrical outer contour,
**characterized in**
- **that** the support structure (11) consists of plastic and is injection molded onto the adsorber material (10),
- **that** the injection-molded support structure (11) is integrated in the cylinder,
- **that** the support structure (11) extends radially through the cylinder.

2. The adsorber element according to claim 1,
**characterized in**
**that** the adsorber material (10) comprises a single-layer or multi-layer sheet material (12) with an adsorber medium (13) embedded therein, wherein it can in particular be provided that the adsorber medium (13) is embedded as free-flowing granulate into the sheet material (12).

3. The adsorber element according to claim 1 or 2,
**characterized in**
**that** radially on the inside, the support structure (11) is flush with the inner contour, and/or radially on the outside, the support structure (11) is flush with the outer contour.

4. The adsorber element according to any one of the claims 1 to 3,
**characterized in**
**that** the support structure (11) is axially flush with an axial front side of the cylinder or forms the respective axial front side of the cylinder.

5. The adsorber element according to any one of the claims 1 to 4,
**characterized in**
- **that** the adsorber material (10) is embedded in the plastic of the support structure (11), and/or
- **that** the adsorber material (10) is closed on axial front sides by the injection-molded support structure (11).

6. The adsorber element according to any one of the claims 1 to 5,
**characterized in**
**that** the adsorber material (10) is segmented in the circumferential direction (16) and has a plurality of separate adsorber material portions (17) which are closed at their circumferential ends by the injection-molded support structure (11), wherein it can in particular be provided that all adsorber material portions (17) or at least two such adsorber material portions (17) are fastened to each other at their circumferential ends by the injection-molded support structure (11).

7. The adsorber element according to any one of the claims 1 to 6,
**characterized in**
**that** the support structure (11) has two rings (14, 15) and a plurality of axial webs (19) which connect the rings (14, 15) to each other.

8. The adsorber element according to any one of the claims 1 to 7,
**characterized in**
- **that** the adsorber element (9) is configured for attaching to an internal frame (8) of a ring filter element (4) of an air filter (1) of the fresh air system (2), or
- **that** the support structure (11) of the adsorber element (9) is formed integral on an internal frame (8) of a ring filter element (4) of an air filter (1) of the fresh air system (2), or
- **that** the adsorber element (9) is configured for installing in an air conveying line (23) of the fresh air system (2), or
- **that** the support structure (11) of the adsorber element (9) is integrally formed in an air conveying line (23) of the fresh air system (2).

9. A ring filter element for an air filter (1) in a fresh air system (2) of an internal combustion engine, in particular of a motor vehicle,
- with a filter material (10) that is supported radially on the inside by an internal frame (8),
- wherein the internal frame (8) has an adsorber element (9) with an adsorber material (10) onto which a support structure (11) of plastic is injection molded.

10. The ring filter element according to claim 9, **characterized in**
- **that** the adsorber element (9) is a separate component with regard to the internal frame (8) and is attached to the internal frame (8), or
- **that** the support structure (11) and the internal frame (8) are made integral from one piece.

11. The ring filter element according to claim 9 or 10, **characterized in**
- **that** the adsorber element (9) forms an axial portion (20), in particular an axial end portion (20) of the internal frame (8), which axial portion supports the filter material (10) radially on the inside, and/or
- **that** axially between the adsorber element (9) and an axial end, the internal frame (8) has a flow obstruction (21) that impairs the axial flow through the internal frame (8), wherein the flow obstruction (21) can extend over the entire inner cross-section of the internal frame (8) and, e.g., can be formed by a screen structure or grid structure.

12. An air conveying line for a fresh air system (2) of an internal combustion engine, in particular of a motor vehicle, said fresh air system having on its inner wall (24) at least one, in particular, coaxially arranged adsorber element (9) according to any one of the claims 1 to 8.

13. The air conveying line according to claim 12, **characterized in**
- **that** the adsorber element (9) is a separate component with regard to the air conveying line (23) and is installed in the air conveying line (23), or that the support structure (11) of the adsorber element (9) and the air conveying line (23) are made integral from one piece, and/or
- **that** the adsorber element (9) is arranged radially recessed in the inner wall (24) of the air conveying line (23), and/or
- **that** the adsorber element (9) is configured as at least two pieces and is assembled during the installation in the air conveying line (23).

14. A method for producing an adsorber element (9) according to any one of the claims 1 to 8,
- wherein the adsorber material (10) is inserted into an injection mold,
- wherein the support structure (11) is injection molded onto the adsorber material (10).

15. The method according to claim 14,
**characterized in**
- **that** the adsorber material (10) is segmented prior to inserting it into the injection mold, wherein the separate adsorber material portions (17) are inserted into the injection mold with the circumferential ends being spaced apart from each other in the circumferential direction (16) or adjoining each other, and/or
- **that** the support structure (11) and the internal frame (8) are injection molded simultaneously in the same injection mold.

## Revendications

1. Élément adsorbant annulaire pour une installation d'air frais (2) d'un moteur à combustion interne, notamment d'un véhicule automobile, pour l'adsorption d'hydrocarbures,
- une structure de support (11) étant agencée sur un matériau adsorbant (10),
- le matériau adsorbant (10) s'étendant de façon cylindrique et définissant un cylindre qui présente un contour intérieur cylindrique et un contour extérieur cylindrique,
**caractérisé en ce que**
- la structure de support (11) est en matière plastique et est injectée sur le matériau adsorbant (10),
- la structure de support (11) injectée est intégrée dans le cylindre,
- la structure de support (11) s'étend de façon radiale à travers le cylindre.

2. Élément adsorbant selon la revendication 1, **caractérisé en ce que** le matériau adsorbant (10) est un matériau en ruban (12) en une ou plusieurs couches et avec un milieu adsorbant (13) noyé dans ledit matériau, le milieu adsorbant (13) pouvant notamment être noyé dans le matériau en ruban (12) sous forme de granulat.

3. Élément adsorbant selon la revendication 1 ou 2, **caractérisé en ce que** la structure de support (11) se termine de façon radiale à l'intérieur de manière à affleurer avec le contour intérieur et/ou de façon radiale à l'extérieur de manière à affleurer avec le contour extérieur.

4. Élément adsorbant selon l'une des revendications 1 à 3, **caractérisé en ce que** la structure de support (11) se termine de façon axiale de manière à affleurer avec un côté frontal axial du cylindre ou forme le côté frontal axial respectif du cylindre.

5. Élément adsorbant selon l'une des revendications 1 à 5, **caractérisé en ce que**
- le matériau adsorbant (10) est noyé dans la matière plastique de la structure de support (11), et/ou
- le matériau adsorbant (10) est fermé au niveau de côtés frontaux axiaux par la structure de support (11) injectée.

6. Élément adsorbant selon l'une des revendications 1 à 5, **caractérisé en ce que** le matériau adsorbant (10) est segmenté en direction périphérique (16) et comporte plusieurs tronçons de matériau adsorbant (17) séparés qui sont fermés au niveau de leurs extrémités périphériques par la structure de support (11) injectée, tous les tronçons de matériau adsorbant (17) ou au moins deux de ces tronçons de matériau adsorbant (17) pouvant notamment être fixés les uns aux autres au niveau de leurs extrémités périphériques par la structure de support (11) injectée.

7. Élément adsorbant selon l'une des revendications 1 à 6, **caractérisé en ce que** la structure de support (11) comporte deux anneaux (14, 15) et plusieurs traverses axiales (19) qui relient entre eux les anneaux (14, 15).

8. Élément adsorbant selon l'une des revendications 1 à 7, **caractérisé en ce que**
- l'élément adsorbant (9) est conçu pour être monté sur un cadre intérieur (8) d'un élément de filtrage annulaire (4) d'un filtre à air (1) de l'installation d'air frais (2), ou
- la structure de support (11) de l'élément adsorbant (9) est formée intégralement sur un cadre intérieur (8) d'un élément de filtrage annulaire (4) d'un filtre à air (1) de l'installation d'air frais (2), ou
- l'élément adsorbant (9) est conçu pour être monté dans une conduite d'air (23) de l'installation d'air frais (2), ou
- la structure de support (11) de l'élément adsorbant (9) est formée intégralement dans une conduite d'air (23) de l'installation d'air frais (2).

9. Élément de filtrage annulaire pour un filtre à air (1) d'une installation d'air frais (2) d'un moteur à combustion interne, notamment d'un véhicule automobile,
- avec un matériau de filtrage (10), qui est soutenu de façon radiale et intérieurement par un cadre intérieur (8),
- le cadre intérieur (8) comportant un élément adsorbant (9) selon l'une des revendications 1 à 8.

10. Élément de filtrage annulaire selon la revendication 9, **caractérisé en ce que**
- l'élément adsorbant (9) est, par rapport au cadre intérieur (8), une pièce séparée et il est monté sur le cadre intérieur (8), ou
- la structure de support (11) et le cadre intérieur (8) sont fabriqués intégralement à partir d'une seule pièce.

11. Élément de filtrage annulaire selon la revendication 9 ou 10, **caractérisé en ce que**
- l'élément adsorbant (9) forme un tronçon axial (20), notamment un tronçon axial terminal (20), du cadre intérieur (8), lequel tronçon axial soutient de façon radiale et intérieurement le matériau de filtrage (10), et/ou
- le cadre intérieur (8) comporte, placé de façon axiale entre l'élément adsorbant (9) et une extrémité axiale, un obstacle d'écoulement (21) qui gêne l'écoulement axial à travers le cadre intérieur (8), l'obstacle d'écoulement (21) pouvant s'étendre sur toute la section transversale intérieure du cadre intérieur (8) et pouvant être formé par exemple par une structure de tamis ou par une structure de grille.

12. Conduite d'air pour une installation d'air frais (2) d'un moteur à combustion interne, notamment d'un véhicule automobile, laquelle conduite d'air comporte sur sa paroi interne (24) au moins un élément adsorbant (9), agencé notamment de façon coaxiale, selon l'une des revendications 1 à 8.

13. Conduite d'air selon la revendication 12, **caractérisée en ce que**
- l'élément adsorbant (9) est une pièce qui est séparée par rapport à la conduite d'air (23) et qui est montée dans la conduite d'air (23) ou la structure de support (11) de l'élément adsorbant (9) et la conduite d'air (23) sont fabriquées intégralement à partir d'une seule pièce, et/ou
- l'élément adsorbant (9) est agencé dans la paroi interne (24) de la conduite d'air (23) de manière à être noyé de façon radiale en affleurant dans celle-ci, et/ou
- l'élément adsorbant (9) est conçu au moins en deux parties et est assemblé lors du montage dans la conduite d'air (23).

14. Procédé de fabrication d'un élément adsorbant (9) selon l'une des revendications 1 à 8,
- selon lequel le matériau adsorbant (10) est placé dans un moule pour moulage par injection,
- selon lequel la structure de support (11) est injectée sur le matériau adsorbant (10).

15. Procédé selon la revendication 14, **caractérisé en ce que**
- le matériau adsorbant (10) est segmenté avant le placement dans le moule pour moulage par injection, les tronçons de matériau adsorbant (17) séparés étant placés dans le moule pour moulage par injection avec des extrémités périphériques agencées, en direction périphérique (16), à une certaine distance les unes des autres ou adjacentes les unes aux autres, et/ou
- la structure de support (11) et le cadre intérieur (8) sont formés simultanément par injection dans le même moule pour moulage par injection.
